# NEW EUROPEAN PATENT SPECIFICATION

(11) **EP 0 647 392 B2**
(45) Date of publication and mention of the opposition decision: **24.09.2003**
(45) Mention of the grant of the patent: 19.01.2000
(21) Application number: 94202890.3
(22) Date of filing: 05.10.1994
(51) Int. Cl.: A01J 7/00

(54) **A construction for automatically milking animals**
Konstruktion zum automatischen Melken von Tieren
Dispositif de traite automatique d'animaux

(30) Priority: 11.10.1993 NL 9301751
(43) Date of publication of application: 12.04.1995
(73) Proprietor: MAASLAND N.V., 3155 PD Maasland (NL)
(72) Inventor: van der Lely, Cornelis, CH-6300 ZUG (CH)
(74) Representative: Corten, Maurice Jean F.M.

(56) References cited:
- EP-A- 0 258 938
- EP-A- 0 300 582
- EP-A- 0 306 579
- EP-A- 0 472 247
- EP-A- 0 532 066
- WO-A-93/13651

## Description

The invention relates to a construction for automatically milking animals, according to the preamble of claim 1.

Constructions of this type are known from EP-A-0 300 582.

The invention has for its object to provide an alternative construction of the above-described type.

According to the invention this is achieved by the features of the characterizing part of claim 1.

According to a feature of the invention at least two units are pivotal about a substantially vertical shaft. In accordance with the invention, the construction is further characterized in that a teat cup, after it has been disconnected from a relevant teat, can be connected again without it being necessary that one of the further teat cups is first disconnected. Thus, when the disconnected teat cup is connected again, a saving of time is achieved. Furthermore, the flow of milk from the animal during renewed connecting of the disconnected teat cup can continue. In accordance with a still further feature of the invention, the head end of the milking robot has holders for teat cups, in which a holder can be moved downwards, whilst an other holder is arranged such that it can be moved upwards. By moving a holder down after an associated teat cup has been connected, the teat cup holder does not form an obstacle during connecting of the adjacent teat cup. In accordance with a further feature of the invention, each of the holders is arranged such that it can be moved down and towards the robot head independently of the further holders. In accordance with a further featureof the invention, the motion of a holder in the downward direction and towards the milking robot is so great that this holder remains outside the reach of associated teat cups which have already been connected to the teats, even if the head of the milking robot is moved to a position in which an other teat cup can be connected to a teat. In accordance with a still further feature of the invention, the teat cups are first connected to the rear teats and thereafter to the front teats, whilst, when thereafter one of the teat cups is disconnected from a rear teat, the adjacent holder of the teat cup connected to a front teat can be moved down so far and towards the milking robot that, when the relevant teat cup is again connected to the rear teat, this adjacent holder remains outside the reach of the relevant teat cap connected to a front teat

According to the invention, the milking robot further includes four units, each comprising a holder including a teat cup and a portion of a milk and/or pulsation tube, as well as a lifting mechanism for this holder. To facilitate replacement of such a unit, the units can be removed, in accordance with the invention, individually and as an integral whole from the milking robot.

In accordance with a characterizing feature of the invention, the lifting mechanism is constituted by a four-bar linkage which is mainly operative and deformable in a predominantly vertical plane and forms a system of rods. In accordance with a still further feature of the invention, a unit includes a carrier element which can be rigidly mounted on the milking robot and on which a motor is disposed, the lifting mechanism being operative between the carrier element and the holder of a teat cup, whilst the holder is movable from a condition of rest both downwards towards the milking robot and upwards by means of a motor-driven transmission element. In accordance with a feature of the invention, the motor is a stepping motor and the transmission element is formed by a threaded spindle which is drivable by this motor and co-operates with a nut attached to the holder. In accordance with a further feature of the invention, the units are arranged such that they are slidable by means of a carrier element over a carrier beam which is rigidly attached to the milking robot.

In accordance with a still further feature of the invention, the pivotal portion of the unit can be pivoted with the aid of a stepping motor.

In accordance with a further feature of the invention, the carrier element includes a connecting block for a milk and/or pulsation tube which extends from the relevant teat cup. In accordance with a still further feature of the invention, the milk and/or pulsation tube portion extends in the shape of a loop between the teat cup and a connecting block

In accordance with the invention, the construction is further characterized, in that the portion of the milk and/or pulsation tube between the teat cup and a connecting block passes underneath the head or through the lower portion of the head of the milking robot to beyond that end of the head that is remote from the teat cups and thereafter is looped-back in a predominantly vertical plane to the connecting block. To prevent the milk and/or pulsation tubes from sagging, the milk and/or pulsation tubes are wrapped together, in accordance with a further feature of the invention, near a connection to the teat cup in a side-by-side relationship.

For a better understanding of the invention and to show how the same may be carried into effect, reference will now be made, by way of example, to the accompanying drawings, in which:
Figure 1 is a side view of a milking cluster incorporating a milking robot, in which the circumference of a milk animal, in the present case a cow, is shown;
Figure 2 is a plan view in accordance with Figure 1, in which a detection member for determining the position of the teats is arranged next to the milking parlour;
Figure 3 shows the front portion of the robot arm of Figure 1, in which the teat cups are arrayed in a central position;
Figure 4 is a plan view of the milking robot head as shown in Figure 3;
Figure 5 illustrates the teat cups in the lifted state;
Figure 6 shows the position of the milking robot head when a front teat cup must be connected again, whilst the rear teat cups are already in the connected state;
Figure 7 is a plan view of the teat cups, in which at the left-hand side of the lay-out of the drawing the arrangement for connecting the teat cups to the teats is shown, whilst at the right-hand side of the drawing the teat cups are shown after they have already been connected to the teats, broken lines indicating the position of the outermost teat cup holders during renewed connection of an inadvertently disconnected front teat cup, and
Figure 8 shows an alternative embodiment of the robot head, in which a holder for a teat cup near this teat cup is provided with a vertical pivot shaft, about which the relevant teat cup can be rotated.

Corresponding components in the drawings have been given the same reference numerals. The invention is in no way limited to the embodiments shown and described here; they only serve by way of illustration of the inventive idea.

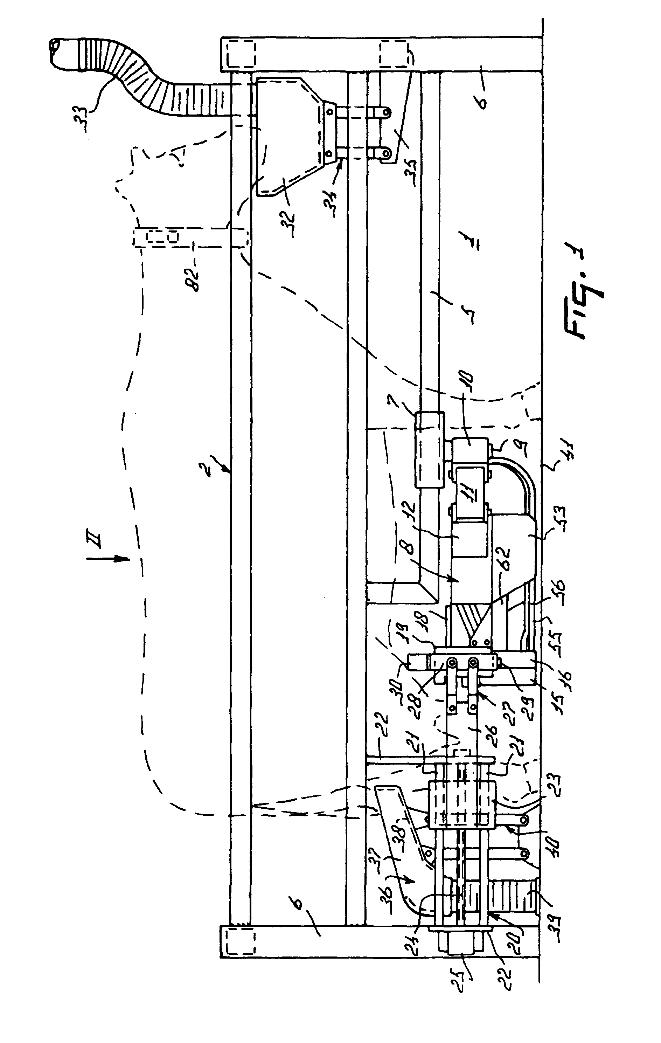

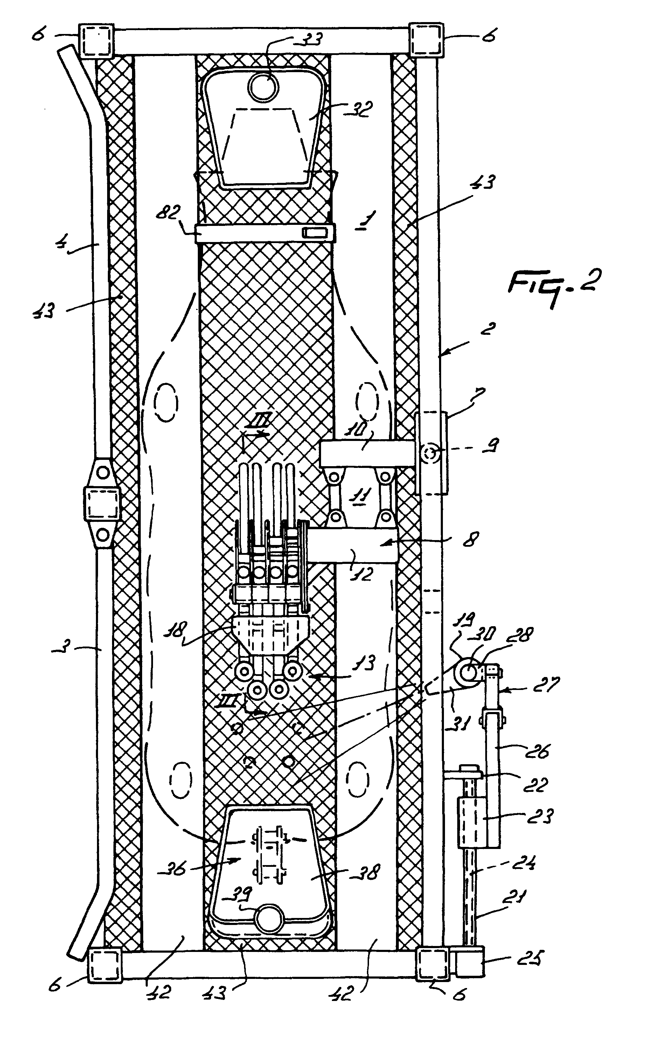

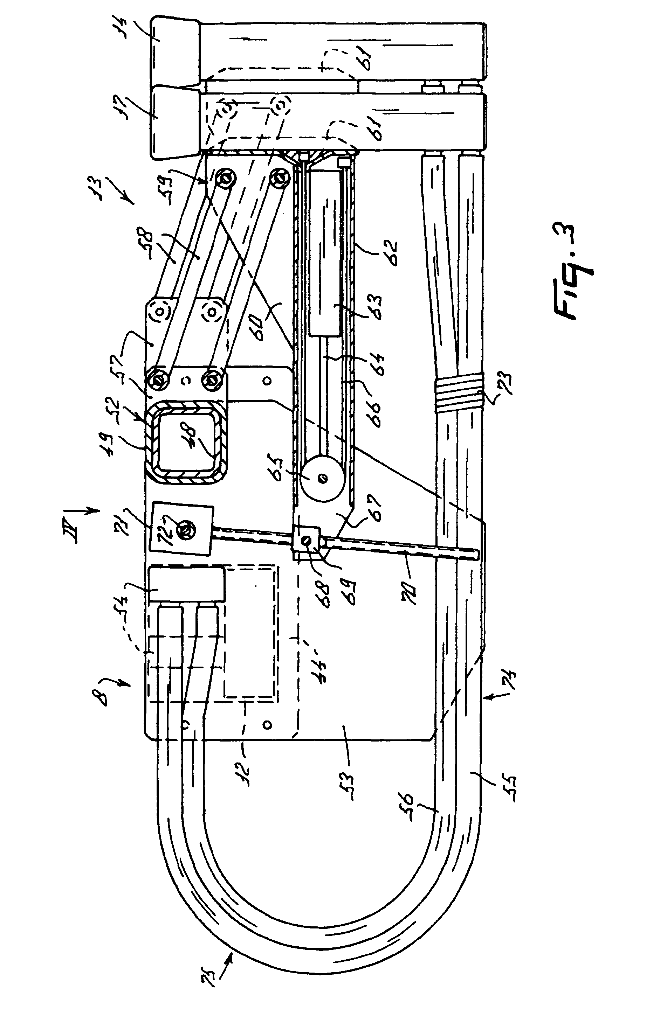

Figure 1 is a side view of a milking box 1, in which the contours of a cow are shown. The milking box 1 includes a railing 2 and is provided at one side with an entrance door 3 and an exit door 4 (Figure 2). At the facing side of the entrance and exit doors, the railing 2 of the milking box 1 is fitted with a longitudinal straight guide 5, which has one end connected to a girder 6 of the milking box 1 and its other end to the side wall of the railing 2. A slidable sleeve 7, which can be moved by a motor (not shown), is accommodated on the straight guide 5. Attached to the sleeve 7 is a milking robot 8 which by shifting of the sleeve 7 moves the milking robot 8 in the longitudinal direction of the milking box 1. A vertical shaft 9, about which a horizontal beam 10 of the milking robot 8 is rotatably attached, is secured to the bottom side of the sleeve 7. A second beam 12 is arranged parallel to the beam 10, at some distance therefrom by means of a four-bar linkage 11. Using a cylinder (not shown), the second beam 12 can be moved relative to the first beam 10 in a horizontal plane, so that a robot head 13, which comprises teat cups 14 to 17 and is attached to the end of the beam 12, can be moved transversely in the milking box. At its upper side, the milking robot head 13 is provided with a cover plate 18 which is slidable towards the teat cups and which, when the teat cups 14 to 17 are not connected to the teats, covers the apertures of the teat cups. At that side of the milking box 1 where the longitudinal straight guide 5 for the milking robot 8 is arranged, a movable detector 19 is disposed, which preferably is constituted by a laser. The position of the teats of an animal to be milked standing in the milking box 1 can be determined with the aid of the detector 19. The detector 19 is connected to a second longitudinal straight guide 20, which renders it possible to slide the detector 19 in the longitudinal direction of the box. The second longitudinal straight guide 20 comprises two spaced-apart rods 21, which are arranged one below the other next to the milking box 1 and have one end connected to the railing 2 of the milking box 1 via two girders 22. A second sleeve 23 is disposed in such a manner around the two longitudinal straight guides 20 that it is slidable in the longitudinal direction of the milking box 1. The second sleeve 23 can be moved along the two longitudinal straight guides 20 by means of a threaded spindle, which is inserted between the two longitudinal straight guides 20 and through the sleeve 23 and is driven by a stepping motor 25. Extending in the longitudinal direction of the milking box 1, the second sleeve 23 is provided with an arm 26 which at its end is provided with a second four-bar linkage 27, to which, extending transversely of the longitudinal direction of the milking box 1, a U-shaped holder 28 is attached. The detector 19 is clamped pivotally about a vertical shaft 29, between the U-shaped holder 28. The detector 19 can be pivoted about the vertical shaft 29 by means of a stepping motor 30 disposed on top of the U-shaped holder 28. The detector 29 is comprised of a vertically arranged cylindrical housing, on top of which a truncated cone-shaped jacket 31 is placed at a square angle. In the present embodiment, the cylindrical housing 19 accommodates a laser, which transmits a signal via a window in this housing and through the truncated cone-shaped jacket 31. It will be obvious that the detector may alternatively be formed by e.g. an ultrasonic sensor. The truncated cone-shaped jacket 31 shields the window in the detector 19, so that the laser and/or e.g. the ultrasonic sensor will not so easily be put out of order by contamination. In addition to the fact that the detector 19 can be moved in the longitudinal direction of the milking box 1, it is also possible for the detector to be moved in height by means of a stepping motor (not shown), using the second four-bar linkage 27.

Near the leading side of the milking box 1 there is further arranged a feeding trough 32, which has at its upper side a flexible tube 33 which is connected to an automatic concentrate dosing device (not shown), for automatically discharging concentrate into the feeding trough 32. At the bottom side, the feeding trough 32 is connected to a vertically arranged third four-bar linkage 34, which has its other end connected to a beam 35 connected horizontally to the railing 2. Using a cylinder (not shown) which is connected to an arm of the third four-bar linkage 34, the feeding trough can be swivelled from the milking box 1 to thereoutside, so that the cow can no longer eat from the feeding trough 32.

The milking box 1 further incorporates, arranged near its trailing end, a dung collecting member 36. The dung collecting member 36 includes a container 37 which has a bottom 38 which extends obliquely downwardly from the cow. The bottom 38 encloses an angle of preferably approximately 20° with the horizontal. Connected to the lowest part of the bottom 38 there is a flexible discharge pipe 39 which leads to a dung cellar (not shown) under the milking box 1. At its bottom side, the container 37 is connected to a vertically arranged fourth four-bar linkage 40, which has its other side connected to the floor 41 of the milking box 1. By means of a cylinder (not shown) connected to the fourth four-bar linkage 40, it is possible to swing the container 37 aside to outside the milking box 1, so that, when a cow enters the milking box 1 via the entrance door 3, it will not be obstructed by the container 37. It will be obvious that, when the cow has taken up her position in the milking box 1, the container 37 will again be swivelled towards the cow, so that, when the cow drops dung, it will be collected in the container 37 and directly discharged into the dung cellar via the flexible discharge pipe 39. Since the bottom 38 is arranged at an oblique angle, the dropping rate of the dung will be low and thus the dung will be prevented from splashing on hitting the bottom 38.

To make the stay of the cow in the milking box 1 a pleasant stay, the floor 41 is provided in the region of the cows legs, with slats 42 which together form a continuous floor. Between and next to the slats 42, the floor 41 is further designed as a grid floor 43. The dung cellar (not shown) is located under the grid floor 43, so that dirt drops into the dung cellar via the grid 43.

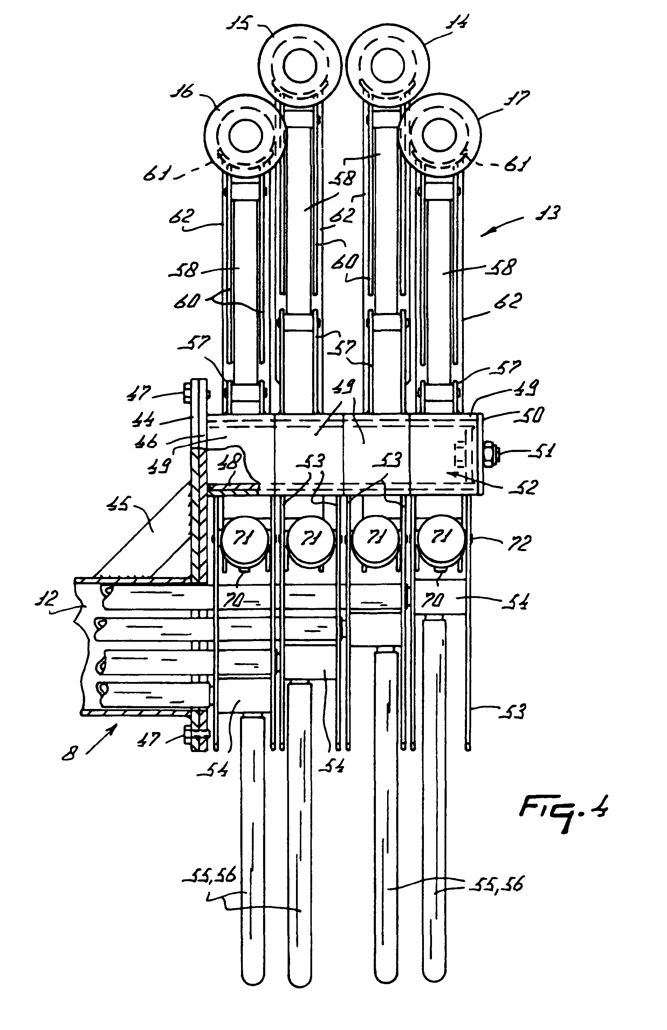

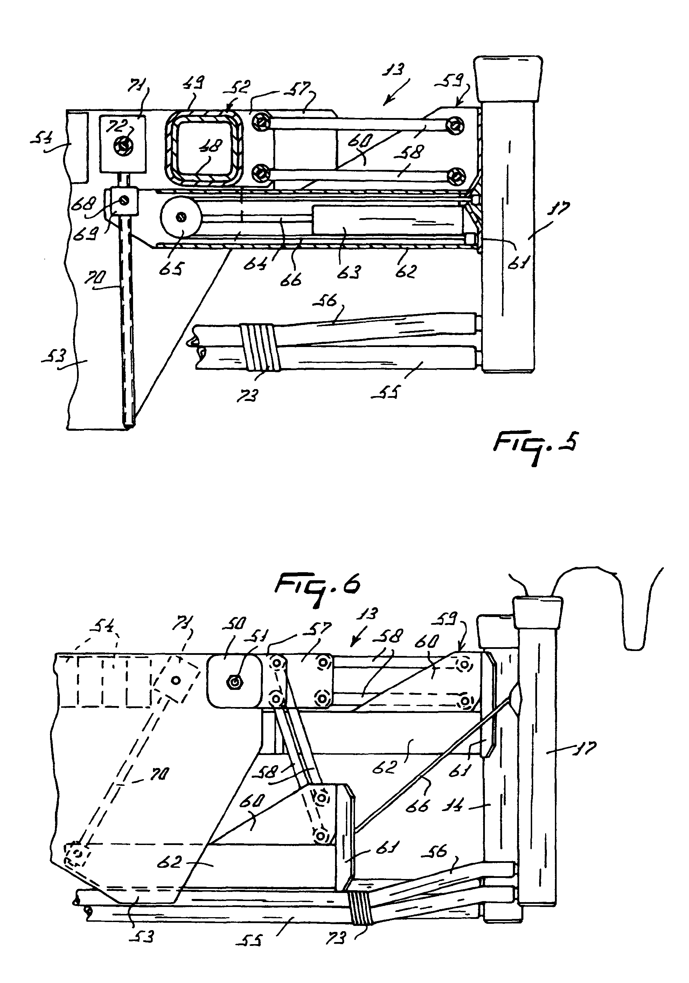

Figures 3 to 8 are further illustrations of the construction of the robot head 13. Figure 4 shows a portion of the second beam 12 of the milking robot 8, and it is shown that the second beam 12 is provided at its end with a plate 44, by means of which the robot head 13 is secured to the second beam 12. A stay rod 45 is arranged between the plate 44 and the second beam 12. The robot head 13 also includes a mounting plate 46 which corresponds to the plate 44 and is detachably bolted to the plate 44 by means of bolts 47. In a position perpendicular to the mounting plate 46 there is a box-like supporting beam 48, around which four units 49 are pushed which are locked by means of an end plate 50 with a bolt 51. The structure of each of the units 49 will now be described in greater detail with reference to Figure 3.

Each unit 49 includes a box-like carrier beam 52, which can be pushed over the supporting beam 48. The carrier beam 52 is provided with two spaced-apart plates 53, between which a connecting block 54 for a milk and pulsation tube 55, 56 is secured. At the leading side of the carrier beam 52, two spaced-apart lugs 57 are disposed, to which a rod system 58 forming a deformable quadrangle is connected. The rod system 58, which forms a deformable quadrangle, has its other end connected to a holder 59 for a teat cup (14; 15; 16; 17). Each of the holders 59 is assembled from two spaced-apart plates 60 which at their ends are interconnected so as to form a curved seat 61, against which a teat cup can bear. By means of their lower sides, the plates 60 are secured on a tubular holder 62, in which a cylinder 63 is accommodated. At the end of the piston rod 64 of the cylinder 63, a roller element 65 is disposed, around which a flexible cord 66 is passed. The cord 66 has one end connected to the tubular holder 62 and the other end to the teat cup. When a teat cup has been connected to a teat, the cylinder 63 is enabled and it is thus possible to pull the cord 66 from the tubular holder 62. When a teat cup is to be disconnected from a teat, the cylinder 63 is energized, as a result of which the cord 66 is retracted into the tubular holder 62, whereafter the teat cup is pulled up against the seat 61. At the other end of the tubular holder 62, two spaced-apart lugs 67 are attached, between which, pivotal about a horizontal shaft 68, a nut 69 is clamped. Inserted through the nut 69 is a threaded end 70, which has one end connected to a stepping motor 71. The stepping motor 71 is clamped between the plates 53 and is rotatable about a horizontal shaft 72. Using the transmission-element 70 which is controlled by the motor 71, it is possible to operate the lifting structure 58, 59, 60, 62, 70, 71, and thus to move the teat cups and also the holder 59 upwardly. Furthermore, each of the units 49 can be replaced individually when getting out of order.

Near the teat cups, the milk tube 55 and the pulsation tube 56 are wrapped together by a wrapping 73. The wrapping 73 may be in the form of a length of tape, an iron wire, a bandage, etc. Because of the wrapping 73, the first portion 74 of the milk and pulsation tubes 55, 56, which extend from the teat cup to just behind the plates 53, is relatively rigid and consequently oriented more or less in a horizontal plane. The second portion 75 of the milk and pulsation tubes 55, 56 extends in the shape of a loop and is located in a vertical plane. The second portion 75 of the milk and pulsation tubes 55, 56 is relatively flexible. During the upward motion of the teat cups, the first portion 74 will therefore bend to a minimum extent, whilst the second portion 75 bends relatively much. Since the first portion 74 is relatively rigid, the milk and pulsation tubes 55, 56 will be prevented from sagging and landing on the floor 41 of the milking box 1. An additional advantage is that, consequently, the head 13 of the milking robot can be moved at a relatively low level along the floor 41, without portions of the milking robot 8 coming into contact with the floor 41 of the milking box 1.

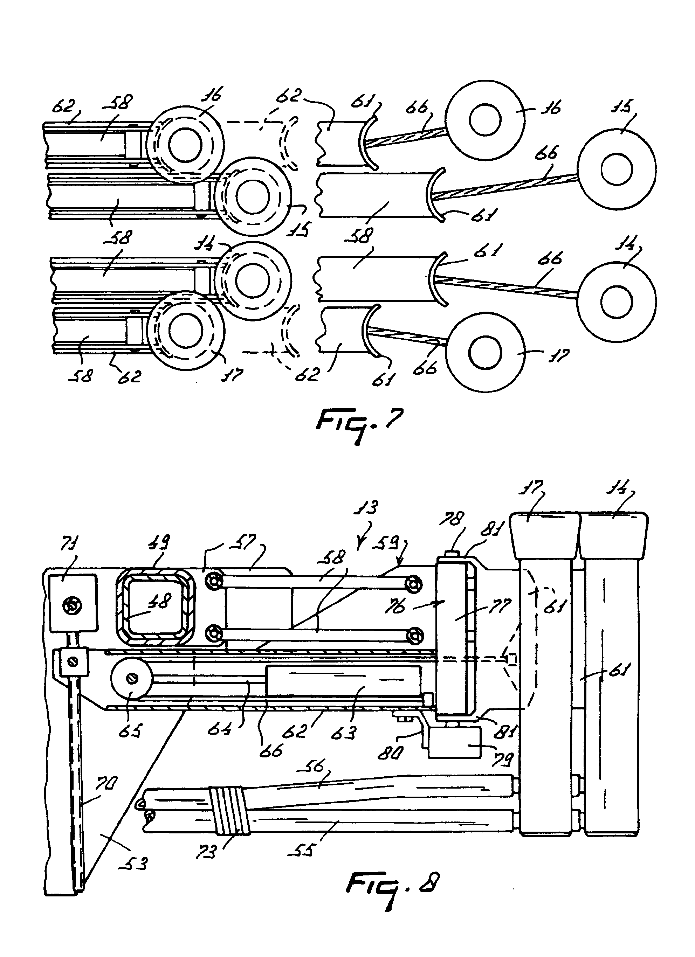

In the second embodiment as shown in Figure 8, the teat cups are pivotal about an upwardly directed shaft with the aid of a pivotal structure 76. The pivotal structure 76 includes a tube 77 attached to the ends of the plates 60. A pivotal shaft 78 is passed through the tube 77, which tube is connected at its bottom side to a stepping motor 79, which itself is rigidly connected to the tubular holder 62 via a support 80. The seat 61 of the teat cup is rigidly connected by means of lugs 81 to the pivotal shaft 78. By energizing the stepping motor 79, it is possible to rotate the seat 61 with the teat cup around the shaft 78. In this manner also teats which are very remote from each other, which e.g. in a plan view are arranged more or less in a square, can easily be reached by the teat cups 14 to 17 without the teat cups forming an obstruction to each other.

The mode of operation of the present construction for automatically milking animals will now be described in greater detail.

When a cow has entered the milking box 1 via the entrance door 3, this is recorded on the basis of the cow identification collar 82 around the neck of the cow and concentrate is discharged in the feeding trough 32 via the concentrate dosing implement. Thereafter the dung collecting member 36 is pivoted to near the rear side of the cow. In consequence thereof the detector 19 is moved in the longitudinal direction of the milking box 1, so that the teats of the cow arrive within the measuring range (taken in the vertical plane) of the detector. By means of the second four-bar linkage 27, the height at which the detector beam of the detector 19 is now located is adjusted such that, also in the horizontal plane, the teats come within the measuring range of the detector 19. Thereafter the stepping motor 30 is energized, so that the detector is pivoted about the vertical shaft 29. The detector 19 is preferably pivoted through an angle of approximately 25°. After the position of the four teats has been determined with the aid of the detector 19, the robot head 13 is pivoted to under the cow and, using the four-bar linkage 11, the robot head 13 is positioned in the lateral direction of the milking box 1. Thereafter the teat cups 14 to 17, by energizing the stepping motor 71, are moved to the central position as shown in Figure 3. Thereafter the robot head is moved in the longitudinal direction of the milking box 1 along the longitudinal straight guide 5, and the teat cup 14 is positioned under the left-hand rear teat. The stepping motor 71 of the teat cup 14 is then energized again, whereafter the teat cup 14 is lifted upwardly, as shown in Figure 5. After the teat cup has been evacuated via the milk tube 55, this cup is connected by this vacuum to the left-hand rear teat and thereafter the cylinder 63 of the teat cup 14 is disabled, so that the teat cup can get loose from the seat 61. Thereafter the teat cups 15, 16 and 17 are connected in the same manner one after the other to the further teats of the cow. In the right-hand half of Figure 7 it is illustrated how the teat cups 14 to 17 are arranged during milking. If now the teat cup 14 is inadvertently kicked from the teat or gets disconnected therefrom in any other way, the teat cup is immediately pulled up against the seat 61 of the relevant holder 59. So as to be able to connect the cup 14 again without the need for the cup 17 to be removed, the holder 59 of the teat cup 17 is thereafter pivoted downwards by means of the stepping motor 71 to the position shown in Figure 6. The holder 59 of the teat cup 17 is then in the position shown in Figure 7 by broken lines. Thereafter the holder 59 of the teat cup 14 is again moved towards the left-hand rear teat, all this in such a manner that the teat cup 14 arrives in a position such that its aperture is in a position under the left-hand rear teat. Thereafter the stepping motor 71 is energized again and the teat cup 14 is moved up and is connected to the teat. The robot head 13 can then again be moved away from the teat, so that the initial situation, such as it is shown at the right-hand half of Figure 7, is obtained. The teat cup 14 is then again in the connected state, without the need for disconnecting the further teat cups. It will be obvious that this procedure results in a considerable gain in time, and that the milking procedure of the other quarters need not be interrupted when the disconnected cup is to be connected to the teat again.

## Claims

1. A construction for automatically milking animals in a milking box (1), the construction comprising a milking robot (8) for automatically connecting teat cups (14, 15, 16, 17) to the teats of an animal, which milking robot (8) is movable from sidewards the milking box (1) to under the udder of an animal to be milked and includes a robot head (13) with units (49), each of which units including a teat cup (14, 15, 16, 17), as well as a lifting mechanism for this teat cup (14, 15, 16, 17) and a holder (59) for this teat cup (14, 15, 16, 17), the milking robot (8) further being provided with a retracting device (66) for a relevant teat cup (14, 15, 16, 17), the retracting device being suitable for pulling up the teat cup (14, 15, 16, 17) against the holder (59) in case the teat cup gets disconnected from the teat, **characterized in that** the robot head (13) comprises four units (49) and that each holder (59) includes a tubular portion, said retracting device (66) being accommodated in the tubular portion (62) of a holder (59), each of the holders (59) being capable of moving down and towards the robot head (13) so as to enable the connection of the disconnected teat cup by moving same up to the teat.

2. A construction as claimed in claim 1, **characterized in that** at least two units (49) are pivotal about a substantially vertical shaft (78).

3. A construction as claimed in claim 1 or 2, **characterized in that** the pivotal portion of the unit is pivoted by means of a stepping motor (79).

4. A construction as claimed in claim 1, 2 or 3, **characterized in that** a retracting device includes a flexible connection member (66), via which a teat cup (14; 15; 16; 17) is connected to a holder (59), whilst the tubular portion (62) of the holder (59) includes an operating cylinder (63) for pulling the relevant disconnected teat cup (14; 15; 16; 17) against the holder (59).

5. A construction as claimed in any one of the preceding claims, **characterized in that** the carrier element (48) includes a connecting block (54) for a milk and/or pulsation tube (55; 56) extending from the relevant teat cup (14; 15; 16; 17).

6. A construction as claimed in claim 5, **characterized in that** the portion (75) of the milk and/or pulsation tube (55; 56) between a teat cup (14; 15; 16; 17) and a connecting block (54) extends in the shape of a loop.

7. A construction as claimed in claim 6, **characterized in that** the portion (75) of the milk and/or pulsation tube (55; 56) between a teat cup (14; 15; 16; 17) and a connecting block (54) passes underneath the head (13) or through the lower portion of the head (13) of the milking robot (8) to beyond that end of the head (13) that is remote from the teat cups (14; 15; 16; 17) and from there back to the connecting block (54) in a loop which extends predominantly in a vertical plane.

8. A construction as claimed in any one of claims 5 to 7, **characterized in that** a further portion of a milk and/or pulsation tube (55; 56) is laterally connected to a connecting block (54).

9. A construction as claimed in any one of claims 5 to 8, **characterized in that** for each teat cup (14; 15; 16; 17) there is a milk and/or pulsation tube (55; 56), which are wrapped together in a side-by-side relationship near their connection to the teat cup (14; 15; 16; 17).

10. A construction as claimed in any one of the preceding claims, **characterized in that** a holder (59) is capable of moving down, whilst an other holder (59) is disposed such that it is capable of moving upwards.

11. A construction as claimed in claim 10, **characterized in that** each of the holders (59) is disposed such that it is capable of moving down and towards the robot head (13) independently of the other holders (59).

12. A construction as claimed in claim 10 or 11, **characterized in that** the downward motion of a holder (59) and the motion towards the milking robot (8) is of such a length that this holder (59) remains outside the reach of the associated teat cup (14; 15; 16; 17) already connected to a teat, even when the head (13) of the milking robot (8) is adjusted to a position in which a further teat cup (14; 15; 16; 17) can be connected to a teat.

13. A construction as claimed in claim 12, **characterized in that** the teat cups (14; 15; 16; 17) are connected first to the rear teats and thereafter to the front teats, whilst, when thereafter one of the teat cups (14; 15; 16; 17) is disconnected from a rear teat, the adjacent holder (57) of the teat cup (14; 15; 16; 17) connected to a front teat can be moved down and towards the milking robot (8) in such a manner that, when the relevant teat cup (14; 15; 16; 17) is again connected to the rear teat, this adjacent holder (57) remains outside the reach of the relevant teat cup (14; 15; 16; 17) connected to a front teat.

14. A construction as claimed in any one of claims 10 to 13, **characterized in that** the head (13) of the milking robot (8) comprises four units (49), each of which includes a holder (57) with a teat cup (14; 15; 16; 17) and a portion of a milk and/or pulsation tube (55; 56), as well as a lifting mechanism for this holder (57).

15. A construction as claimed in claim 14, **characterized in that** the units (49) can be removed individually and as an integral whole from the milking robot (8).

16. A construction as claimed in claim 14 or 15, **characterized in that** the lifting mechanism is constituted by a system of rods (58) which is operative in a predominantly vertical plane and forms a deformable quadrangle.

17. A construction as claimed in any one of claims 14 to 16, **characterized in that** a unit (49) includes a carrier element (48) which can rigidly be secured on the milking robot (8) and on which a motor (71) is disposed, the lifting mechanism acting between the carrier element (48) and the holder (57) for a teat cup (14; 15; 16; 17), whilst using a motor-driven transmission element (70), the holder (57) is movable from a resting position both downwards towards the milking robot (8) and upwards.

18. A construction as claimed in claim 17, **characterized in that** the motor (71) is a stepping motor and the transmission element (70) is formed by a threaded spindle which is drivable by this motor (71) and cooperates with a nut (69) attached to the holder (57).

19. A construction as claimed in claim 17 or 18, **characterized in that** a carrier element (49) is disposed such that it is slidable over a carrier beam (48) which is rigidly attached to the milking robot (8).

## Patentansprüche

1. Vorrichtung zum automatischen Melken von Tieren in einer Melkbox (1), wobei die Vorrichtung einen Melkroboter (8) zum automatischen Anschließen von Zitzenbechern (14, 15, 16, 17) an die Zitzen eines Tieres umfaßt, wobei der Melkroboter (8) von der Seite der Melkbox (1) unter das Euter eines zu melkenden Tieres bewegbar ist und einen Roboterkopf (13) mit Einheiten (49) aufweist, von denen jede einen Zitzenbecher (14, 15, 16, 17) und eine Hebevorrichtung für diesen Zitzenbecher (14, 15, 16, 17) sowie einen Halter (59) für diesen Zitzenbecher (14, 15, 16, 17) enthält, wobei der Melkroboter (8) ferner mit einer Rückziehvorrichtung (66) für einen entsprechenden Zitzenbecher (14, 15, 16, 17) versehen ist, wobei die Rückziehvorrichtung geeignet ist, den Zitzenbecher (14, 15, 16, 17) gegen den Halter (59) zu ziehen, falls der Zitzenbecher von der Zitze abfällt,
**dadurch gekennzeichnet, daß** der Roboterkopf (13) vier Einheiten (49) umfaßt, und daß jeder Halter (59) einen rohrförmigen Abschnitt aufweist, wobei die Rückziehvorrichtung (66) in dem rohrförmigen Abschnitt (62) eines Halters (59) angeordnet ist, wobei jeder Halter (59) nach unten und in Richtung auf den Roboterkopf (13) bewegbar ist, um den Anschluß des abgefallenen Zitzenbechers durch Bewegen desselben nach oben in Richtung auf die Zitze zu ermöglichen.

2. Vorrichtung nach Anspruch 1,
**dadurch gekennzeichnet, daß** mindestens zwei Einheiten (49) um eine im wesentlichen vertikale Achse (78) schwenkbar sind.

3. Vorrichtung nach Anspruch 1 oder 2,
**dadurch gekennzeichnet, daß** der schwenkbare Teil der Einheit mittels eines Schrittmotors (79) geschwenkt wird.

4. Vorrichtung nach Anspruch 1, 2 oder 3,
**dadurch gekennzeichnet, daß** eine Rückziehvorrichtung ein elastisches Verbindungsglied (66) enthält, über welches ein Zitzenbecher (14; 15; 16; 17) mit einem Halter (59) verbunden ist, wobei der rohrförmige Abschnitt (62) des Halters (59) einen Arbeitszylinder (63) enthält, um den betreffenden abgefallenen Zitzenbecher (14; 15; 16; 17) gegen den Halter (59) zu ziehen.

5. Vorrichtung nach einem der vorhergehenden Ansprüche,
**dadurch gekennzeichnet, daß** das Tragelement (48) ein Anschlußstück (54) für eine Milch- und/oder Pulsierleitung (55; 56) enthält, die von dem jeweiligen Zitzenbecher (14; 15; 16; 17) ausgeht.

6. Vorrichtung nach Anspruch 5,
**dadurch gekennzeichnet, daß** der Abschnitt (75) der Milch- und/oder Pulsierleitung (55; 56) zwischen einem Zitzenbecher (14; 15; 16; 17) und einem Anschlußstück (54) in Form einer Schlaufe angeordnet ist.

7. Vorrichtung nach Anspruch 6,
**dadurch gekennzeichnet, daß** der Abschnitt (75) der Milch- und/oder Pulsierleitung (55; 56) zwischen einem Zitzenbecher (14; 15; 16; 17) und einem Anschlußstück (54) unterhalb des Kopfes (13) oder durch den unteren Teil des Kopfes (13) des Melkroboters (8) hindurch über das von den Zitzenbechern (14; 15; 16; 17) abgewandte Ende des Kopfes (13) hinaus verläuft und von dort zum Anschlußstück (54) in einer sich im wesentlichen in einer vertikalen Ebene erstreckenden Schlaufe zurückgeführt ist.

8. Vorrichtung nach einem der Ansprüche 5 bis 7,
**dadurch gekennzeichnet, daß** ein weiterer Teil einer Milch- und/oder Pulsierleitung (55; 56) seitlich an ein Anschlußstück (54) angeschlossen ist.

9. Vorrichtung nach einem der Ansprüche 5 bis 8,
**dadurch gekennzeichnet, daß** für jeden Zitzenbecher (14; 15; 16; 17) eine Milch- und/oder Pulsierleitung (55; 56) vorhanden ist, die nahe ihrem Anschluß an den Zitzenbecher (14; 15; 16; 17) nebeneinanderliegend zusammengebunden sind.

10. Vorrichtung nach einem der vorhergehenden Ansprüche,
**dadurch gekennzeichnet, daß** ein Halter (59) nach unten bewegbar ist, während ein anderer Halter (59) derart angeordnet ist, daß er nach oben bewegbar ist.

11. Vorrichtung nach Anspruch 10,
**dadurch gekennzeichnet, daß** jeder Halter (59) derart angeordnet ist, daß er unabhängig von den anderen Haltern (59) nach unten und in Richtung auf den Roboterkopf (13) bewegbar ist.

12. Vorrichtung nach Anspruch 10 oder 11,
**dadurch gekennzeichnet, daß** die Bewegung eines Halters (59) nach unten und die Bewegung in Richtung auf den Melkroboter (8) so bemessen ist, daß dieser Halter (59) außerhalb der Reichweite des zugehörigen, bereits an eine Zitze angeschlossenen Zitzenbechers (14; 15; 16; 17) bleibt, selbst wenn der Kopf (13) des Melkroboters (8) in eine Position eingestellt ist, in der ein weiterer Zitzenbecher (14; 15; 16; 17) an eine Zitze anschließbar ist.

13. Vorrichtung nach Anspruch 12,
**dadurch gekennzeichnet, daß** die Zitzenbecher (14; 15; 16; 17) zuerst an die hinteren Zitzen und danach an die vorderen Zitzen angeschlossen werden, wobei im Falle eines anschließenden Abfallens einer der Zitzenbecher (14; 15; 16; 17) von einer hinteren Zitze der benachbarte Halter (57) des an eine vordere Zitze angeschlossenen Zitzenbechers (14; 15; 16; 17) nach unten und in Richtung auf den Melkroboter (8) bewegbar ist, derart, daß bei erneutem Anschluß des betreffenden Zitzenbechers (14; 15; 16; 17) an die hintere Zitze dieser benachbarte Halter (57) außerhalb der Reichweite des betreffenden, an eine vordere Zitze angeschlossenen Zitzenbechers (14; 15; 16; 17) bleibt.

14. Vorrichtung nach einem der Ansprüche 10 bis 13,
**dadurch gekennzeichnet, daß** der Kopf (13) des Melkroboters (8) vier Einheiten (49) aufweist, von denen jede einen Halter (57) mit einem Zitzenbecher (14; 15; 16; 17) und einen Teil einer Milch- und/oder Pulsierleitung (55; 56) sowie eine Hebevorrichtung für diesen Halter (57) enthält.

15. Vorrichtung nach Anspruch 14,
**dadurch gekennzeichnet, daß** die Einheiten (49) einzeln und als Baueinheit von dem Melkroboter (8) zu lösen sind.

16. Vorrichtung nach Anspruch 14 oder 15,
**dadurch gekennzeichnet, daß** die Hebevorrichtung durch ein Gestänge (58) gebildet ist, das in einer überwiegend vertikalen Ebene wirksam ist und verformbares Viergelenk bildet.

17. Vorrichtung nach einem der Ansprüche 14 bis 16,
**dadurch gekennzeichnet, daß** eine Einheit (49) ein Tragelement (48) enthält, das an dem Melkroboter (8) starr befestigbar ist, und an dem ein Motor (71) angeordnet ist, wobei die Hebevorrichtung zwischen dem Tragelement (48) und dem Halter (57) eines Zitzenbechers (14; 15; 16; 17) wirksam ist, und wobei der Halter (57) mittels eines angetriebenen Übertragungselementes (70) aus einer Ruhelage sowohl nach unten in Richtung auf den Melkroboter (8) als auch nach oben bewegbar ist.

18. Vorrichtung nach Anspruch 17,
**dadurch gekennzeichnet, daß** der Motor (71) ein Schrittmotor ist und das Übertragungselement (70) aus einer Gewindespindel besteht, die durch diesen Motor (71) antreibbar ist und mit einer an dem Halter (57) angebrachten Mutter (69) zusammenwirkt.

19. Vorrichtung nach Anspruch 17 oder 18,
**dadurch gekennzeichnet, daß** ein Tragelement (49) derart angeordnet ist, daß es an einem Tragarm (48) verschiebbar ist, der an dem Melkroboter (8) starr befestigt ist.

## Revendications

1. Installation destinée à la traite automatique d'animaux dans un box de traite (1), l'installation comprenant un robot de traite (8) pour connecter automatiquement des gobelets trayeurs (14 ; 15 ; 16 ; 17) sur les trayons d'un animal, lequel robot de traite (8) est mobile depuis un côté du box de traite (1) jusqu'en dessous des pis de l'animal à traire et comporte une tête de robot (13) avec des unités (49) dont chacune comporte un gobelet trayeur (14 ; 15 ; 16 ; 17), ainsi qu'un mécanisme de levage pour ce gobelet trayeur (14 ; 15 ; 16 ; 17) et un support (59) pour ce gobelet trayeur (14 ; 15; 16 ; 17), le robot de traite (8) étant muni en outre d'un dispositif de rétraction (66) destiné au gobelet trayeur concerné (14 ; 15 ; 16 ; 17) , le dispositif de rétraction (66) étant adapté pour tirer vers le haut le gobelet trayeur (14 ; 15 ; 16 ; 17) contre le support (59) dans le cas où le gobelet trayeur devient déconnecté du trayon, **caractérisé en ce que** la tête de robot (13) comprend quatre unités (49) et **en ce que** chaque support (59) comporte une partie tubulaire, ledit dispositif de rétraction (66) étant reçu dans la partie tubulaire (62) d'un support (59), chacun des supports (59) étant capable de se déplacer vers le bas et en direction de la tête de robot (13) de manière à permettre la connexion du gobelet trayeur déconnecté en déplaçant celui-ci vers le haut vers le trayon.

2. Installation selon la revendication 1, **caractérisée en ce qu'**au moins deux unités (49) sont pivotantes autour d'un arbre sensiblement vertical (78).

3. Installation selon la revendication 1 ou 2, **caractérisée en ce que** la partie pivotante de l'unité est mise à pivoter par l'intermédiaire d'un moteur pas à pas (79).

4. Installation selon la revendication 1, 2 ou 3, **caractérisée en ce qu'**un dispositif de rétraction comporte un élément de connexion souple (66) via lequel un gobelet trayeur (14 ; 15 ; 16 ; 17) est connecté à un support (59), alors que la partie tubulaire (62) du support (59) comporte un vérin d'actionnement (63) destiné à tirer le gobelet trayeur déconnecté concerné (14 ; 15 ; 16 ; 17) contre le support (59).

5. Installation selon l'une quelconque des revendications précédentes, **caractérisée en ce que** l'élément porteur (48) comporte un bloc de connexion (54) pour un tuyau de lait et/ou de pulsation (55 ; 56) s'étendant à partir du gobelet trayeur concerné (14 ; 15 ; 16 ; 17).

6. Installation selon la revendication 5, **caractérisée en ce que** la partie (75) du tuyau de lait et/ou pulsation (55 ; 56) située entre un gobelet trayeur (14 ; 15 ; 16 ; 17) et un bloc de connexion (54) s'étend sous la forme d'une boucle.

7. Installation selon la revendication 6, **caractérisée en ce que** la partie (75) du tuyau de lait et/ou pulsation (55 ; 56) située entre un gobelet trayeur 14 ; 15 ; 16 ; 17) et un bloc de connexion (54) passe en dessous de la tête (13) ou à travers la partie inférieure de la tête (13) du robot de traite (8) jusqu'au delà de l'extrémité de la tête (13) qui est éloignée des gobelets trayeurs (14 ; 15 ; 16 ; 17) et à partir de là en arrière vers le bloc de connexion (54) selon une boucle qui s'étend de manière prédominante dans un plan vertical.

8. Installation selon l'une quelconque des revendications 5 à 7, **caractérisée en ce qu'**une autre partie d'un tuyau de lait et/ou pulsation (55 ; 56) est reliée latéralement à un bloc de connexion (54).

9. Installation selon l'une quelconque des revendications 5 à 8, **caractérisée en ce que** pour chaque gobelet trayeur (14 ; 15 ; 16 ; 17) il existe un tuyau de lait et/ou pulsation (55 ; 56), qui sont enroulés ensemble selon une disposition côte à côte à proximité de leur connexion sur le gobelet trayeur (14 ; 15 ; 16 ; 17).

10. Installation selon l'une quelconque des revendications précédentes, caractérisée en qu'un support (59) est capable de se déplacer vers le bas, alors qu'un autre support (59) est disposé de telle sorte qu'il est capable de se déplacer vers le haut.

11. Installation selon la revendication 10, **caractérisée en ce que** chacun des supports (59) est disposé de telle sorte qu'il est capable de se déplacer vers le bas et en direction de la tête de robot (13) indépendamment des autres supports (59).

12. Installation selon la revendication 10 ou 11, **caractérisée en ce que** le mouvement vers le bas d'un support (59) et le mouvement en direction du robot de traite (8) sont d'une telle longueur que ce support (59) reste à l'extérieur de la portée du gobelet trayeur associé (14 ; 15 ; 16 ; 17) déjà connecté à un trayon, même lorsque la tête (13) du robot de traite (8) est ajustée à une position dans laquelle un autre gobelet trayeur (14 ; 15 ; 16 ; 17) peut être connecté à un trayon.

13. Installation selon la revendication 12, **caractérisée en ce que** les gobelets trayeurs (14 ; 15 ; 16 ; 17) sont connectés tout d'abord aux trayons arrière et après ceci aux trayons avant, alors que, après qu'un des gobelets trayeurs (14 ; 15 ; 16 ; 17) ait été déconnecté d'un trayon arrière, le support adjacent (57) du gobelet trayeur (14 ; 15 ; 16 ; 17) connecté à un trayon avant peut être déplacé vers le bas et en direction du robot de traite (8) de manière telle que, lorsque le gobelet trayeur concerné (14 ; 15 ; 16 ; 17) est à nouveau connecté sur le trayon arrière, ce support adjacent (57) reste en dehors de la portée du gobelet trayeur concerné (14 ; 15 ; 16 ; 17) connecté à un trayon avant.

14. Installation selon l'une quelconque des revendications 10 à 13, **caractérisée en ce que** la tête (13) du robot de traite (8) comporte quatre unités (49), dont chacune comporte un support (57) ayant un gobelet trayeur (14 ; 15 ; 16 ; 17) et une partie d'un tuyau de lait et/ou de pulsation (55 ; 56), ainsi qu'un mécanisme de levage de ce support (57).

15. Installation selon la revendication 14, **caractérisée en ce que** les unités (49) peuvent être enlevées individuellement et sous forme d'un tout à partir du robot de traite (8).

16. Installation selon la revendication 14 ou 15, **caractérisée en ce que** le mécanisme de levage est constitué d'un système de tiges (58) qui est actif dans un plan de manière prédominante vertical et forme un quadrilatère déformable.

17. Installation selon l'une quelconque des revendications 14 à 16, **caractérisée en ce qu'**une unité (49) comporte un élément porteur (48) qui peut être fixé rigidement sur le robot de traite (8) et sur lequel est disposé un moteur (71), le mécanisme de levage agissant entre l'élément porteur (48) et le support (57) d'un gobelet trayeur (14 ; 15 ; 16 ; 17), alors qu'en utilisant un élément de transmission entraîné par moteur (70), le support (57) est mobile à partir d'une position de repos à la fois vers le bas en direction du robot de traite (8) et vers le haut.

18. Installation selon la revendication 17, **caractérisée en ce que** le moteur (71) est un moteur pas à pas et l'élément de transmission (70) est formé par une broche filetée qui peut être entraînée par ce moteur (71) et coopère avec un écrou (69) fixé sur le support (57).

19. Installation selon la revendication 17 ou 18, **caractérisée en ce qu'**un élément porteur (49) est disposé de telle sorte qu'il peut coulisser sur une poutre porteuse (48) qui est fixée rigidement sur le robot de traite (8).
